# EUROPÄISCHE PATENTSCHRIFT

(11) **EP 3 140 163 B1**
(45) Veröffentlichungstag und Bekanntmachung des Hinweises auf die Patenterteilung: **07.11.2018**
(21) Anmeldenummer: 15723831.2
(22) Anmeldetag: 05.05.2015
(51) Int. Cl.: B60R 21/214

(54) **VERFAHREN ZUM ZUSAMMENLEGEN EINES GASSACKES, GASSACK GEFALTET GEMÄSS EINEM DERARTIGEN VERFAHREN, GASSACK, GASSACKMODUL UND FAHRZEUGSICHERHEITSSYSTEM**
METHOD FOR FOLDING AN AIRBAG, AIRBAG FOLDED ACCORDING A METHOD OF TO THIS TYPE, AIRBAG, AIRBAG MODULE, AND VEHICLE SAFETY SYSTEM
PROCÉDÉ DE PLIAGE D'UN COUSSIN DE SÉCURITÉ GONFLABLE, COUSSIN DE SÉCURITÉ GONFLABLE PLIÉ CONFORMÉMENT À UN PROCÉDÉ DE CE TYPE, COUSSIN DE SÉCURITÉ GONFLABLE, MODULE DE COUSSIN DE SÉCURITÉ GONFLABLE ET SYSTÈME DE SÉCURITÉ DE VÉHICULE

(30) Priorität: 07.05.2014 DE 102014006576
(43) Veröffentlichungstag der Anmeldung: 15.03.2017
(73) Patentinhaber: TRW Automotive GmbH, 73553 Alfdorf (DE); Dalphi Metal España, S.A., 36213 Vigo (ES)
(72) Erfinder: PEYRE, Jean-Christophe, E-47150 Viana de Cega (Valladolid) (ES); RAMOS, Ramón, E-47150 Viana de Cega (Valladolid) (ES)
(74) Vertreter: ZF TRW Patentabteilung
(86) Internationale Anmeldenummer: PCT/EP2015/000919
(87) Internationale Veröffentlichungsnummer: WO 2015/169440

(56) Entgegenhaltungen:
- JP-A- 2008 007 034
- US-A1- 2003 052 476
- US-A1- 2005 070 414
- US-A1- 2008 238 052

## Beschreibung

Die Erfindung betrifft ein Verfahren zum Zusammenlegen eines Gassackes, insbesondere eines unter einem Fahrzeugdach anzuordnenden Gassackes, mit einer Einblasöffnung, einem in Längsrichtung daran anschließend angeordneten Führungsabschnitt und einem in Längsrichtung an den Führungsabschnitt anschließend angeordneten Aufblasabschnitt. Daneben betrifft die Erfindung einen Gassack, der entsprechend des erfindungsgemäßen Verfahrens gefaltet ist. Des Weiteren betrifft die Erfindung einen Gassack, ein Gassackmodul sowie ein Fahrzeugsicherheitssystem.

Aus dem Stand der Technik sind sogenannte Bag-In-Roof (BIR) Airbagmodule bekannt. Diese sind üblicherweise am Fahrzeugdach im Bereich bzw. in der Nähe des oberen Windschutzscheibenrands angeordnet. Beispielsweise wird in der WO 2007/014581 A1 ein derartiges Airbagmodul beschrieben. Im Aktivierungsfall wird der Gassack aufgeblasen und dadurch aus dem Gehäuse gedrückt. Eine Modulverkleidung weist im Bereich des Gassacks eine Sollbruchstelle oder eine Öffnung auf, durch die der Gassack in den Innenraum des Fahrzeugs gedrückt wird und sich dort entfaltet. Es hat sich gezeigt, dass sich der Gassack ausgehend vom Fahrzeugdach oftmals schlagartig vertikal entfaltet, so dass der entfaltete Gassack direkt auf die Beine des Fahrzeuginsassens prallen kann, und dieser nicht optimal vor einem Fahrzeugaufprall geschützt ist. Weiterhin hat es sich gezeigt, dass das Entfaltungsverhalten eines Gassackes stark durch die Art des Zusammenlegens beeinflusst wird. Die US 2008/238052 A1 bzw. die US 2005/070414 A1 offenbaren einen Gassack für ein Gassackmodul aus dem Stande der Technik, entsprechend dem Oberbegriff des Anspruchs 9.

Die Aufgabe der vorliegenden Erfindung ist es, ein Verfahren zum Zusammenlegen eines Gassackes zu schaffen, durch das der Gassack ein optimiertes Entfaltungsverhalten aufweist und sich vorzugsweise entlang einer Windschutzscheibe entfaltet. Ferner besteht die Aufgabe darin, einen weiterentwickelten Gassack anzugeben, der durch ein optimiertes Entfaltungsverhalten in Richtung einer Windschutzscheibe gekennzeichnet ist.

Des Weiteren besteht die Aufgabe der Erfindung darin, ein Gassackmodul sowie ein Fahrzeugsicherheitssystem mit einem weiterentwickelten Gassack anzugeben.

Erfindungsgemäß wird diese Aufgabe im Hinblick auf das Verfahren zum Zusammenlegen eines Gassackes durch den Gegenstand des Patentanspruches 1, im Hinblick auf den Gassack durch den Gegenstand des Patentanspruches 8 oder 9, im Hinblick auf das Gassackmodul durch den Gegenstand des Patentanspruches 14 und im Hinblick auf das Fahrzeugsicherheitssystem durch den Gegenstand des Patentanspruches 15 gelöst.

Vorteilhafte und zweckmäßige Ausgestaltungen des erfindungsgemäßen Verfahrens zum Zusammenlegen eines Gassackes bzw. des erfindungsgemäßen Gassackes sind in den Unteransprüchen angegeben.

Das erfindungsgemäße Verfahren zum Zusammenlegen eines Gassackes betrifft insbesondere einen unter einem Fahrzeugdach anzuordnenden Gassack. Der Gassack weist eine Einblasöffnung, einen in Längsrichtung daran anschließend angeordneten Führungsabschnitt und einen in Längsrichtung an den Führungsabschnitt anschließend angeordneten Aufblasabschnitt auf. Demnach sind die Einblasöffnungen, der Führungsabschnitt und der Aufblasabschnitt in Längserstreckung des Gassackes hintereinander angeordnet, so dass der Führungsabschnitt zwischen dem Aufblasabschnitt und der Einblasöffnung angeordnet ist. Erfindungsgemäß umfasst das Verfahren folgende Schritte:
- flaches Ausbreiten des Gassackes;
- mindestens abschnittsweises seitliches Zusammenlegen, insbesondere Zickzack-Falten, von mindestens einem Seitenteil des Gassackes in Richtung der Längsachse des Gassackes;
- mindestens abschnittsweises Aufrollen des Aufblasabschnittes ausgehend von einer zur Einblasöffnung maximal beabstandeten Endkante des Gassackes in einer ersten Aufrollrichtung in Richtung zur Einblasöffnung;
- Ausbilden des Führungsabschnitts durch Legen mindestens einer Faltung mit einer ersten Faltbiegung entgegen der ersten Aufrollrichtung derart, dass das Entfaltungsverhalten des Gassackes beeinflusst wird.

Die Erfindung beruht demnach auf dem Gedanken, nach dem flachen Ausbreiten des Gassackes zunächst mindestens ein Seitenteil des Gassackes, vorzugsweise beide Seitenteile des Gassackes mindestens abschnittsweise seitlich zusammenzulegen, wobei das Zusammenlegen bzw. insbesondere Zickzack-Falten in Richtung der Längsachse des Gassackes erfolgt. Die Längsachse des Gassackes entspricht der im Anwendungsfall vorhandenen Entfaltungsrichtung des Gassackes. Die Faltbiegungen bzw. Kanten bzw. Falzen der zusammengelegten Seitenteile des Gassackes verlaufen demzufolge in Längsrichtung des Gassackes bzw. rechtwinklig zur Breite des Gassackes.

Nach dem mindestens abschnittsweise durchgeführten seitlichen Zusammenlegen von mindestens einem Seitenteil des Gassackes erfolgt mindestens abschnittsweise ein Aufrollen des Aufblasabschnittes. Beim Aufrollen des Aufblasabschnittes wird von der Endkante des Gassackes ausgegangen, die der Kante des Gassackes entspricht, die zur Einblasöffnung maximalst beabstandet ist. Die Endkante wird in Richtung zur Einblasöffnung aufgerollt. Dies entspricht der ersten Aufrollrichtung. Anschließend wird der Führungsabschnitt des Gassackes ausgebildet. Dies erfolgt durch Legen mindestens einer Faltung mit einer ersten Faltbiegung entgegen der ersten Aufrollrichtung derart, dass das Entfaltungsverfahren des Gassackes beeinflusst wird. Mit anderen Worten bildet der Führungsabschnitt in Relation zum aufgerollten Aufblasabschnitt eine erste, entgegen gerichtete Faltung, die das Entfaltungsverhalten des Gassackes derart beeinflusst, dass dieser sich entlang der Windschutzscheibe entfaltet. Als Faltung und/oder Falten ist im Folgenden nicht nur das Einbringen einer Falz zu verstehen. Vielmehr beschreibt eine Faltung ein zueinander anordnen von Faltlagen, welche mittels einer Faltbiegung und/oder eine Falz und/oder einer Kante zueinander angeordnet sind bzw. zueinander angeordnet werden.

Das mindestens abschnittsweise Aufrollen des Aufrollabschnittes ist derart zu verstehen, dass das Zusammenlegen dieses Teils des Gassackes dadurch erfolgt, dass ausgehend von der vorgenannten Endkante mehrere Faltenlagen bzw. Gassacklagen beispielsweise in Form eines Aufrollvorganges gebildet werden. Dies kann jedoch auch in einem Zusammenfaltvorgang erfolgen. Demnach werden mehrere Gassacklagen übereinander angeordnet, wobei die übereinander angeordneten Gassacklagen in Form eines Wickelfalzes angeordnet sind. Das Aufrollen bezeichnet demnach das Zusammenlegen eines Teilbereiches des Gassackes durch Wicklung, wobei dies mit oder ohne Kanten erfolgen kann, wobei bei dem Ausbilden von Falzen bzw. Kanten von einer Faltung und bei einer Wicklung ohne Falten eben von einem Rollen bzw. Wickeln allgemeiner Art auszugehen ist.

Im Aktivierungsfall des Gassackes strömt das Gas durch die Einblasöffnung zuerst in den Führungsabschnitt des Gassackes, bevor es in den Aufblasabschnitt des Gassackes strömt und diesen entfaltet. Durch das einströmende Gas bläst sich zuerst der Führungsabschnitt auf. Der gefaltete Führungsabschnitt des Gassackes entfaltet sich aufgrund des einströmenden Gases und kann dadurch den noch zusammengerollten Aufblasabschnitt des Gassackes aus einem Gehäuse und/oder aus einer Abdeckung herausdrücken. Der Führungsabschnitt bewirkt dadurch ein gezieltes Entfalten des Gassackes entlang einer Windschutzscheibe, sofern der in einem erfindungsgemäßen Verfahren zusammengelegte Gassack unter einem Fahrzeugdach im Bereich des oberen Windschutzscheibenrands angeordnet ist und die Öffnung des Gehäuses in Richtung der Windschutzscheibe zeigt.

Anschließend strömt das Gas in den Aufblasabschnitt des Gassackes und füllt diesen. Durch dieses Verfahren zum Zusammenlegen eines Gassackes ist sichergestellt, dass im Aktivierungsfall zuerst der Führungsabschnitt aufgeblasen wird und dieser den teilaufgefüllten Gassack mit noch aufgerolltem Aufblasabschnitt in Längsrichtung bzw. in Längserstreckung des Gassackes drückt bzw. führt.

Der Führungsabschnitt kann gemäß einer ersten Ausführungsform des erfindungsgemäßen Verfahrens zumindest abschnittsweise ziehharmonikaartig entgegen der ersten Aufrollrichtung gefaltet werden.

Erfindungsgemäss wird eine erste und eine zweite Faltlage des Führungsabschnitts ausgehend von der ersten Faltbiegung derart gelegt werden, dass diese eine erste Öffnung bilden, die in Richtung der Einblasöffnung und somit in die erste Aufrollrichtung weist. Als Öffnung ist in diesem Zusammenhang der Bereich von zwei Faltlagenanordnungen zu verstehen, der keine Faltbiegung aufweist sondern einen Zugang zu dieser Faltbiegung ermöglicht.

Erfindungsgemäss wird ein Ausbilden mindestens einer zweiten Faltbiegung in dem Führungsabschnitt folgen, wobei die zweite Faltlage und eine dritte Faltlage ausgehend von der zweiten Faltbiegung eine zweite Öffnung bilden, die von der Einblasöffnung weg weist bzw. entgegen der ersten Aufrollrichtung orientiert ist. Demnach weisen die erste Öffnung und die zweite Öffnung zueinander.

Des Weiteren kann ein Ausbilden mindestens einer dritten Faltbiegung in dem Führungsabschnitt folgen, wobei die dritte Faltlage und eine vierte Faltlage ausgehend von der dritten Faltbiegung eine dritte Öffnung bilden, die in Richtung der Einblasöffnung weist. Demnach weisen die erste und dritte Öffnung in die gleiche Richtung, nämlich in Richtung der Einblasöffnung. Diese Richtung entspricht der ersten Aufrollrichtung. Die zweite Öffnung und die dritte Öffnung weisen demnach zueinander bzw. in entgegengesetzte Richtungen.

Sofern in dem Führungsabschnitt drei Faltbiegungen aus vier Faltlagen ausgebildet sind, kann der Führungsabschnitt bei einem Längsschnitt durch den zusammengelegten Gassack die Querschnittsform eines T's aufweisen.

Das erfindungsgemäße Verfahren kann des Weiteren ein zusätzliches Falten, insbesondere ein Zickzack-Falten, mindestens eines Seitenteils des aufgerollten Aufblasabschnittes vorsehen, wobei das Falten rechtwinklig zur ersten Aufrollrichtung durchgeführt wird. Nach dem Ausbilden eines Führungsabschnittes kann demnach ein weiterer Faltvorgang folgen. Es kann vorgesehen sein, dass beide Seitenteile des aufgerollten Aufblasabschnittes zusätzlich gefaltet, insbesondere zickzack gefaltet werden. Die Faltbiegungen und/oder Kanten und/oder Falzen verlaufen demzufolge in Längsrichtung des Gassackes bzw. rechtwinklig zur Breite des Gassackes.

Das zusätzliche Falten, insbesondere das Zickzack-Falten, mindestens eines Seitenteils kann bis auf die Breite der Einblasöffnung erfolgen. Mit anderen Worten wird mindestens ein Seitenteil, vorzugsweise beide Seitenteile derart gefaltet bzw. zickzack gefaltet, bis die Seitenteile und demnach der gesamte Gassack die Breite der Einblasöffnung aufweist. Dadurch erhält der zusammengelegte Gassack eine möglichst kompakte Form, in der dieser platzsparend in ein Gehäuse und/oder unter eine Abdeckung eingebaut werden kann.

Im Rahmen eines weiteren Aspekts beruht die Erfindung auf dem Gedanken, einen Gassack anzugeben, der gemäß einem zuvor genannten erfindungsgemäßem Verfahren gefaltet wurde. Es ergeben sich ähnliche Vorteile, wie diese bereits im Zusammenhang mit dem eingangs beschriebenen erfindungsgemäßen Verfahren erläutert wurden.

Hinsichtlich eines Gassackes wird die Aufgabe des Weiteren durch die Merkmale des Patentanspruches 9 gelöst. Demnach dient der Gassack insbesondere zur Anordnung unter einem Fahrzeugdach, wobei der Gassack eine Einblasöffnung und einen Aufblasabschnitt umfasst. Erfindungsgemäß weist der Gassack einen Führungsabschnitt auf, der zwischen der Einblasöffnung und dem Aufblasabschnitt angeordnet ist, wobei der Aufblasabschnitt in einer ersten Aufrollrichtung in Richtung der Einblasöffnung aufgerollt ist und der Führungsabschnitt durch Legen mindestens einer Faltung mit einer ersten Faltbiegung entgegen der ersten Aufrollrichtung gebildet ist derart, dass das Entfaltungsverhalten des Gassackes beeinflussbar ist.

Mit anderen Worten umfasst der Gassack drei Teile bzw. drei Abschnitte, nämlich eine Einblasöffnung, einen Aufblasabschnitt und einen Führungsabschnitt, wobei der Führungsabschnitt zwischen der Einblasöffnung und dem Aufblasabschnitt ausgebildet ist. In Längsrichtung an die Einblasöffnung anschließend ist der Führungsabschnitt ausgebildet, wobei in Längsrichtung an dem Führungsabschnitt der Aufblasabschnitt ausgebildet ist. Es ergeben sich ähnliche Vorteile, wie diese bereits im Zusammenhang mit dem eingangs beschriebenen erfindungsgemäßen Verfahren erläutert wurden.

Der Führungsabschnitt kann mindestens abschnittsweise ziehharmonikaartig entgegen der ersten Aufrollrichtung gefaltet sein. Des Weiteren ist es denkbar, dass eine erste und eine zweite Faltlage des Führungsabschnitts ausgehend von der ersten Faltbiegung derart gelegt sind, dass diese eine erste Öffnung bilden, die in Richtung der Einblasöffnung weist. Die erste Öffnung weist demnach in die erste Aufrollrichtung. Als Öffnung ist in diesem Zusammenhang der Bereich von zwei Faltlagenanordnungen zu verstehen, der keine Faltbiegung aufweist sondern einen Zugang zu dieser Faltbiegung ermöglicht. Als Faltbiegung ist in diesem Zusammenhang sowohl das Ausbilden einer Rundung, als auch einer Kante und/oder einer Falz zu verstehen.

Zusätzlich kann in dem Führungsabschnitt eine zweite Faltbiegung ausgebildet sein, wobei von der zweiten Faltlage und einer dritten Faltlage eine zweite Öffnung gebildet ist, die von der Einblasöffnung weg weist. Die zweite Öffnung weist demnach in eine zur ersten Aufrollrichtung entgegengesetzte Richtung. Die erste Öffnung und die zweite Öffnung weisen demnach zueinander hin. Die erste Öffnung und die zweite Öffnung können in horizontaler Verlängerung zueinander angeordnet sein bzw. sich auf einer Parallelen zur Längsachse des Gassackes befinden.

Des Weiteren kann es vorgesehen sein, dass in dem Führungsabschnitt eine dritte Faltbiegung ausgebildet ist, wobei von der dritten Faltlage und einer vierten Faltlage ausgehend von der dritten Faltbiegung eine dritte Öffnung gebildet ist, die in Richtung der Einblasöffnung weist. Die erste Öffnung und die dritte Öffnung weisen demnach in die gleiche Richtung, nämlich in Richtung der Einblasöffnung bzw. in die erste Aufrollrichtung. Die zweite Öffnung und die dritte Öffnung weisen folglich zueinander. Sofern im Führungsabschnitt drei Faltbiegungen ausgebildet sind, kann der Führungsabschnitt bei einer Seitenansicht die Form eines T's aufweisen.

Der Gassack kann des Weiteren eine zusätzliche Faltung, insbesondere eine Zickzack-Faltung mindestens eines Seitenteils des aufgerollten Aufblasabschnittes aufweisen. Die Faltung erfolgt rechtwinklig zur ersten Aufrollrichtung, so dass die gebildeten Faltbiegungen und/oder die Kanten und/oder die Falzen im Wesentlichen parallel zueinander in Richtung der ersten Aufrollrichtung ausgebildet sind.

Im Rahmen eines nebengeordneten Aspekts beruht die Erfindung auf dem Gedanken, ein Gassackmodul, insbesondere zur Anordnung unter einem Fahrzeugdach, mit einem vorbeschriebenen Gasgenerator anzugeben. Das erfindungsgemäße Gassackmodul umfasst des Weiteren einen Gasgenerator zum Aufblasen des Gassackes. Es ergeben sich ähnliche Vorteile, wie diese bereits im Zusammenhang mit dem eingangs beschriebenen erfindungsgemäßen Verfahren bzw. mit dem erfindungsgemäßen Gassack erläutert wurden.

Beispielsweise ist der Gasgenerator ein Rohrgasgenerator, wobei die Längsachse des Gasgenerators parallel zum aufgerollten Aufblasabschnitt des Gassackes und/oder senkrecht zur ersten Aufrollrichtung liegt. Aufgrund dessen kann ein Gassackmodul in besonders platzsparender Form zur Verfügung gestellt werden.

Hinsichtlich eines Fahrzeugsicherheitssystems wird die Aufgabe durch die Merkmale des Anspruches 15 gelöst. Demnach weist ein Fahrzeugsicherheitssystem einen erfindungsgemäßen Gassack und/oder ein erfindungsgemäßes Gassackmodul auf. Es ergeben sich ähnliche Vorteile, wie diese bereits im Zusammenhang mit dem eingangs beschriebenen erfindungsgemäßen Verfahren zum Zusammenlegen eines Gassackes und/oder mit dem erfindungsgemäßen Gassack und/oder mit dem erfindungsgemäßen Gasgenerator erläutert wurden.

In einer Ausführungsform des Fahrzeugsicherheitssystems ist der Gassack und/oder das Gassackmodul hinter einer Abdeckung des Fahrzeughimmels im Bereich eines oberen Windschutzscheibenrandes angeordnet, wobei der Gassack beim Auslösen entlang der Windschutzscheibe entfaltbar und aufblasbar ist. Demnach wird ein Fahrzeugsicherheitssystem angegeben, welches im Zusammenhang mit einem Bag-In-Roof-Airbagmodul einen hohen Insassenschutz bietet, da der Gassack des Fahrzeugsicherheitssystems entlang der Windschutzscheibe entfaltbar und aufblasbar ist und somit ein Aufprall des Gassackes auf den Beinen des Fahrzeuginsassen vermieden wird und anstelle dessen der Kopf und Oberkörperbereich des Fahrzeuginsassens geschützt wird.

Die Erfindung wird im Folgenden anhand von Ausführungsbeispielen unter Bezugnahme auf die beigefügten, schematischen Zeichnungen näher erläutert. Weitere Merkmale und Vorteile der Erfindung ergeben sich aus der nachfolgenden Beschreibung in Verbindung mit diesen Zeichnungen. Darin zeigen:
- Figur 1:: eine Schnittdarstellung eines erfindungsgemäßen Gassackes;
- Figuren 2a-2e:: einzelne Verfahrensschritte nach dem erfindungsgemäßen Verfahren zum Zusammenlegen eines Gassackes;
- Figuren 3a-3f:: einzelne Stadien eines Auslösevorgangs in Verbindung mit einem erfindungsgemäßen Gassack; und
- Figuren 4a-4i:: einzelne Stadien eines Auslösevorgangs in Verbindung mit einer zweiten Variante des erfindungsgemäßen Gassacks.

Im Folgenden werden für gleiche und gleichwirkende Teile gleiche Bezugszeichen verwendet.

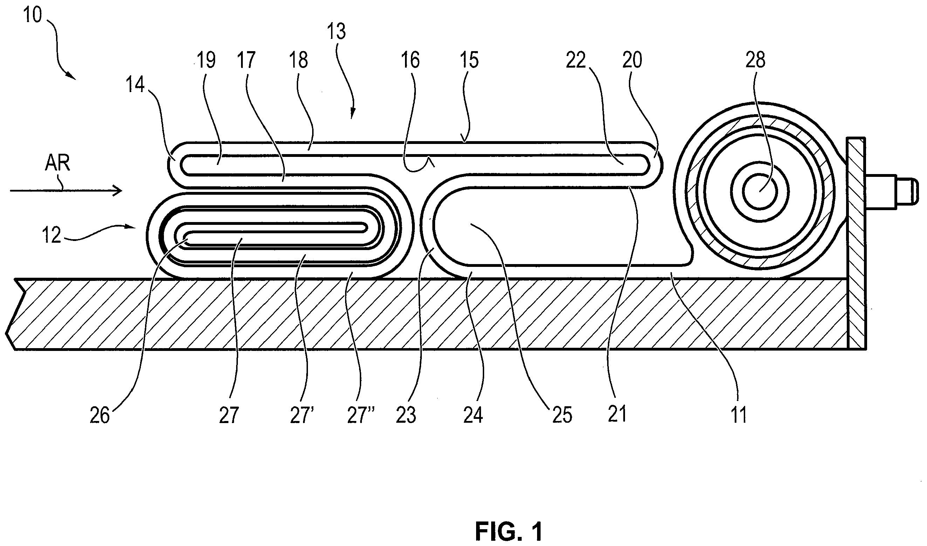

In Fig. 1 ist ein erfindungsgemäßer Gassack 10 im zusammengelegten Zustand dargestellt. Dieser Gassack 10 eignet sich insbesondere zur Anordnung unter einem Fahrzeugdach.

Der Gassack 10 umfasst eine Einblasöffnung 11 sowie einen Aufblasabschnitt 12. Zwischen der Einblasöffnung 11 und dem Aufblasabschnitt 12 ist ein Führungsabschnitt 13 angeordnet. Der Aufblasabschnitt 12 ist in einer ersten Aüfrollrichtung AR, die in Richtung der Einblasöffnung 11 weist, aufgerollt. Der Führungsabschnitt 13 ist durch Legen mindestens einer Faltung mit einer ersten Faltbiegung 14 entgegen der ersten Aufrollrichtung AR gebildet derart, dass das Entfaltungsverhalten des Gassackes 10 beeinflussbar ist. Bei dem in Fig. 1 dargestellten Gassack 10 werden die Oberseite 15 sowie die Unterseite 16 direkt übereinander angeordnet, so dass das Zusammenlegen des Gassackes 10 sowohl die Oberseite 15 des Gassackes 10 als auch die Unterseite 16 des Gassackes 10 betrifft. Demnach sind eine obere Gassacklage, also die Oberseite 15, und eine untere Gassacklage, also die Unterseite 16, auch während des Zusammenlegens unverändert, vorzugsweise parallel zueinander, angeordnet.

Im Aktivierungsfall des Gassackes 10 strömt das Gas durch die Einblasöffnung 11 zuerst in den Führungsabschnitt 13, bevor es in den aufgerollten Aufblasabschnitt 12 des Gassackes 10 strömt und diesen entfaltet. Durch das einströmende Gas bläst sich zuerst der mit mindestens einer ersten Faltbiegung 14 gebildete Führungsabschnitt 13 auf. Der zusammengelegte bzw. gefaltete Führungsabschnitt 13 des Gassackes 10 entfaltet sich durch das einströmende Gas und drückt dadurch den noch zusammengerollten Aufblasabschnitt 12 aus einem Gehäuse bzw. aus einer Abdeckung heraus. Anschließend strömt das Gas in den Aufblasabschnitt 12 des Gassackes 10 und füllt diesen. Durch dieses Verfahren ist sichergestellt, dass der zusammengelegt Gassack 10 bei entsprechender Montage unter einem Fahrzeugdach, vorzugsweise im Bereich eines oberen Windschutzscheibenrandes, beim Auslösen entlang der Windschutzscheibe entfaltbar und aufblasbar ist.

Der Führungsabschnitt 13 weist mehrere Faltlagen auf, wobei eine erste Faltlage 17 und eine zweite Faltlage 18 des Führungsabschnittes 13 ausgehend von der ersten Faltbiegung 14 derart gelegt sind, dass diese eine erste Öffnung 19 bilden, die in Richtung der Einblasöffnung 11 weist. Die Öffnungsrichtung der ersten Öffnung 19 entspricht demnach der Aufrollrichtung AR. Die erste Faltlage 17 und die zweite Faltlage 18 sind parallel zueinander angeordnet und mittels der ersten Faltbiegung 14 zueinander positionierbar bzw. positioniert. Die erste Faltbiegung 14 ist bogenförmig ausgebildet, wobei diesbezüglich auch das Ausbilden einer Kante und/oder einer Falz denkbar ist.

In dem Führungsabschnitt 13 ist zusätzlich eine zweite Faltbiegung 20 ausgebildet, wobei von der zweiten Faltlage 18 und einer dritten Faltlage 21 ausgehend von der zweiten Faltbiegung 20 eine zweite Öffnung 22 gebildet ist, die von der Einblasöffnung 11 weg weist. Die zweite Faltlage 18 und die dritte Faltlage 21 sind parallel zueinander angeordnet und mittels der zweiten Faltbiegung 20 zueinander positionierbar bzw. positioniert. Auch in diesem Zusammenhang kann vorgesehen sein, die zweite Faltbiegung 20 wie im dargestellten Beispiel bogenförmig auszubilden und/oder mit einer Kante und/oder mit einer Falz. Die erste Öffnung 19 und die zweite Öffnung 22 weisen zueinander, wobei die zweite Öffnung 22 demnach von der Einblasöffnung 11 weg weist. Die zweite Öffnung 22 weist folglich in entgegengesetzte Richtung zur ersten Aufrollrichtung AR.

In dem Führungsabschnitt 13 ist eine dritte Faltbiegung 23 ausgebildet, wobei von der dritten Faltlage 21 und einer vierten Faltlage 24 ausgehend von der dritten Faltbiegung 23 eine dritte Öffnung 25 gebildet ist, die in Richtung der Einblasöffnung 11 weist. Die Öffnungsrichtung der dritten Öffnung 25 entspricht demnach der Öffnungsrichtung der ersten Faltbiegung 14 und somit der ersten Aufrollrichtung AR. Die dritte Faltlage 21 und die vierte Faltlage 24 sind parallel zueinander angeordnet und mittels der gebogen ausgeführten dritten Faltbiegung 23 miteinander verbunden bzw. mittels der dritten Faltbiegung 23 zueinander angeordnet.

Der Führungsabschnitt 13 umfasst gemäß Ausführungsform in Fig. 1 drei Faltbiegungen 14, 20 und 23, so dass der Führungsabschnitt 13 mit den vier Faltlagen 17, 18, 21 und 24 im Längsschnitt bei einer entsprechenden Seitenansicht eine T-Form bildet. Ausschlaggebend für die Funktionsweise des Gassackes 10 ist die Ausbildung der ersten Faltbiegung 14, welche entgegen der ersten Aufrollrichtung AR zusammengelegt bzw. gefaltet bzw. aufgerollt ist. Mit Hilfe der ersten Faltbiegung 14 wird demnach eine erste, entgegen gerichtete Rollfalte in Relation zu dem aufgerollten Aufblasabschnitt 12 gebildet.

Beim Aktivierungsfall wird das Gas über die Einblasöffnung 11 zunächst in Richtung der dritten Faltbiegung 23 geblasen, so dass die dritte Faltbiegung 23 zunächst ein horizontales Verschieben, nämlich entgegen der Aufrollrichtung AR, der zweiten Faltbiegung 20 sowie der ersten Faltbiegung 14 bewirkt. Auch das Aufblasen der zweiten Faltbiegung 20 sowie der ersten Faltbiegung 14 bewirkt eine Führung des Aufblasverhaltens des Gassackes 10 in horizontaler Richtung entgegen der ersten Aufrollrichtung AR, so dass der Zweck des Führungsabschnittes 13, nämlich ein beeinflusstes Entfalten des Gassackes entlang einer Windschutzscheibe erfüllt ist. Der Führungsabschnitt 13 kann auch lediglich eine erste Faltbiegung 14, d.h. lediglich eine erste Faltlage 17 und eine zweite Faltlage 18 aufweisen. Die Ausbildung einer zweiten Faltbiegung 20 und/oder einer dritten Faltbiegung 23 ist optional, verstärkt allerdings die Wirkweise des erfindungsgemäßen Gassackes 10.

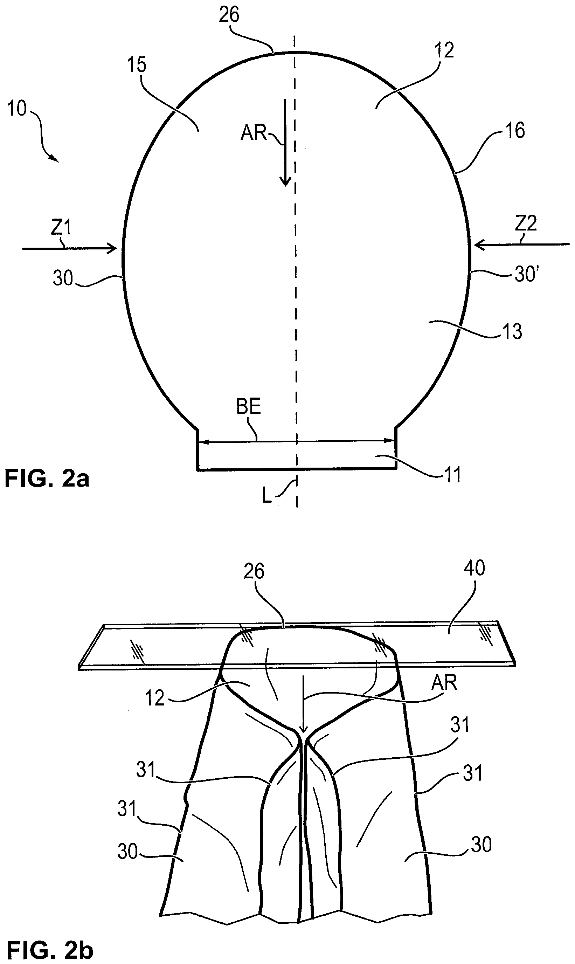

Der Aufblasabschnitt 12 ist in Längserstreckung des Gassackes 10 anschließend an dem Führungsabschnitt 13 angeordnet, wobei der Führungsabschnitt 13 in Längsrichtung an die Einblasöffnung 11 anschließt. Der Aufblasabschnitt 12 ist aufgerollt, d.h. ausgehend von der Endkante 26, die in ausgebreitetem Zustand des Gassackes 10 (siehe Fig. 2a) die zur Einblasöffnung 11 maximalst beabstandete Kante des Gassackes 10 darstellt, wird der Aufblasabschnitt 12 in Aufrollrichtung AR, also in Richtung zur Einblasöffnung 11 aufgerollt. Dabei werden mehrere Lagen 27, 27', 27" gebildet, die jeweils eine vorherige Lage des Aufblasabschnittes 12 ummanteln. Demnach wird durch das Aufrollen des Aufblasabschnittes 12 ausgehend von der Endkante 26 eine Wicklung aus drei Wicklungslagen 27, 27', 27" gebildet. Das Aufrollen des Aufblasabschnittes 12 beschreibt einen Aufwickelvorgang, der entweder mit Faltbiegungen, wie dies in Fig. 1 dargestellt ist oder mit Kanten und/oder Falzen ausgebildet sein kann.

Der erfindungsgemäße Gassack 10 kann als Teil eines Gassackmoduls ausgebildet sein. In der Einblasöffnung 11 des Gassackes 10 kann demnach ein Gasgenerator 28 angeordnet sein. Vorzugsweise ist der Gasgenerator 28 ein Rohrgasgenerator, wobei sich die Längsachse des Gasgenerators 28 senkrecht zur ersten Aufrollrichtung AR bzw. parallel zu der Längserstreckung der Faltbiegungen 14, 20 und 23 erstreckt. Das Gassackmodul erhält aufgrund der Ausbildung eines Rohrgenerators 28 eine besonders platzsparende Form.

In den Figuren 2a-2e wird der erfindungsgemäße Gassack 10 hinsichtlich der einzelnen erfindungsgemäßen Verfahrensschritte dargestellt. Zunächst wird der Gassack 10 flach ausgebreitet. Zu erkennen sind die Einblasöffnung 11, der Führungsabschnitt 13 sowie der Aufblasabschnitt 12. Die zur Einblasöffnung 11 maximal beabstandete Kante des Gassackes 10 ist die Endkante 26. Die Oberseite 15 und Unterseite 16 des Gassackes 10 werden im Folgenden in ihrer Anordnung zueinander belassen, d.h. das Zusammenlegen des Gassackes 10 erfolgt mit Beibehaltung der zueinander, zumindest abschnittsweise deckungsgleich, angeordneten Oberseite 15 und Unterseite 16 des Gassackes 10.

In einem ersten Schritt erfolgt ein abschnittsweises seitliches Zusammenlegen der Seitenteile 30 und 30' des Gassackes in Richtung der Längsachse L des Gassackes 10. Hierzu werden die Seitenteile 30 und 30' mittels Zickzack-Falten in Richtung der Längsachse L des Gassackes 10 zusammengelegt. Das linke Seitenteil 30 wird in Faltungsrichtung Z1 zickzack gefaltet. Die Faltungsrichtung verläuft senkrecht zur Längsachse L des Gassackes 10. Die in das Seitenteil 30 eingebrachten Zickzack-Falten erstrecken sich wiederum in Längsrichtung L des Gassackes. Das rechte Seitenteil 30' wird ebenfalls in Richtung der Längsachse L des Gassackes 10 zickzack gefaltet, wobei die Faltungsrichtung Z2 senkrecht zur Längsachse L des Gassackes 10 verläuft. Die Faltungsrichtung Z1 und die Faltungsrichtung Z2 verlaufen demnach parallel, in entgegengesetzter Richtung, zueinander. Die in das rechte Seitenteil 30' eingearbeiteten Zickzack-Falten verlaufen in Richtung der Längsachse L des Gassackes 10.

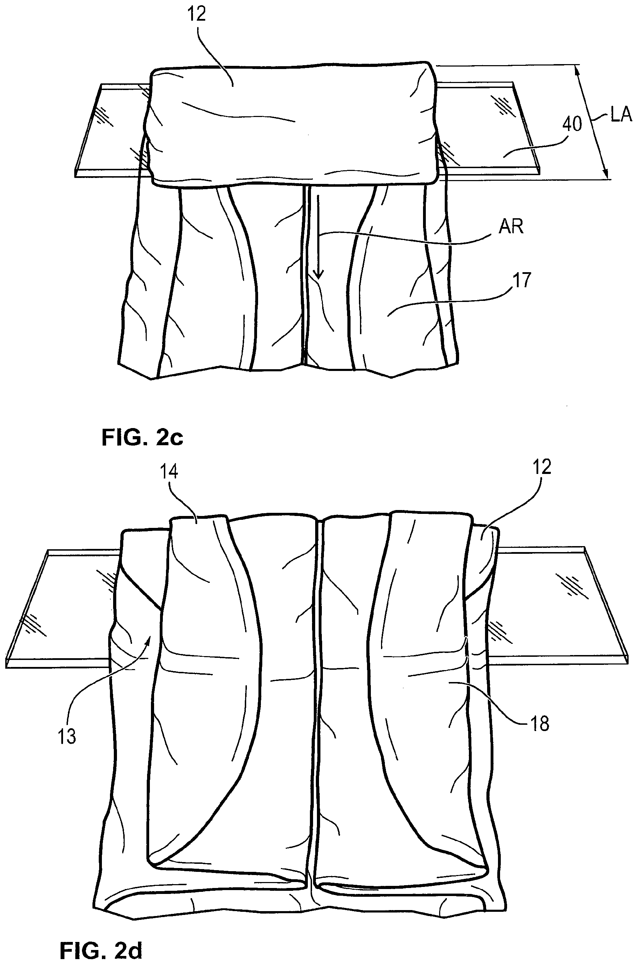

Die Falten 31 der Zickzack-Faltung der Seitenteile 30 und 30' sind in Fig. 2b dargestellt. Es folgt das abschnittsweise Aufrollen des Aufblasabschnittes 12, ausgehend von der Endkante 26 des Gassackes 10 in der ersten Aufrollrichtung AR. Diese verläuft entlang der Längsachse L des Gassackes 10. Wie in Fig. 2c dargestellt, kann das Aufrollen des Aufblasabschnittes 12 mit einem Hilfsmittel 40 erfolgen. Mit dessen Hilfe kann eine gleichmäßige Aufrollung bzw. Aufwicklung des Aufblasabschnittes 12 erfolgen, wobei die Länge LA des Aufblasabschnittes 12 in diesem Fall 70 mm beträgt. Die Länge LA kann zwischen 100 und 50 mm, insbesondere zwischen 90 und 60 mm, insbesondere zwischen 80 und 65 mm, betragen.

In Fig. 2d wird das Ausbilden des Führungsabschnittes 13 durch Legen mindestens einer Faltung mit einer ersten Faltbiegung 14 dargestellt. Das Ausbilden des Führungsabschnittes 13 erfolgt derart, dass das Entfaltungsverhalten des Gassackes 10 beeinflusst wird. Die Faltbiegung 14 wird durch Legung einer ersten Faltlage 17 entgegen der Aufrollrichtung AR und durch Legung einer zweiten Faltlage 18 in Aufrollrichtung AR gebildet, so dass die erste Faltbiegung 14 und eine erste Öffnung 19 gebildet wird, die in Richtung der Einblasöffnung 11 weist bzw. in die erste Aufrollrichtung AR.

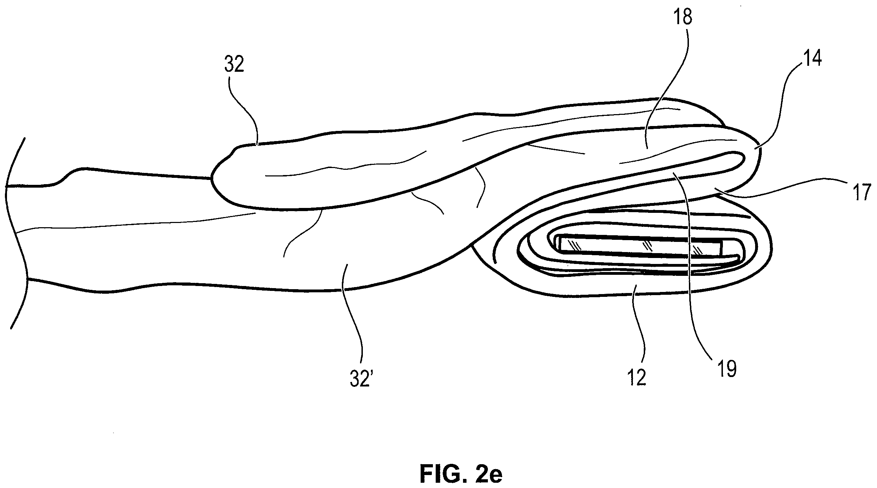

In Fig. 2e wird die Bildung der ersten Faltbiegung 14 aufgrund der Anordnung bzw. Legung der ersten Faltlage 17 und der zweiten Faltlage 18 in einer Seitenansicht dargestellt. Optional kann die Ausbildung der zweiten Faltbiegung 20 und der dritten Faltbiegung 23 mit Hilfe einer dritten Faltlage 21 und einer vierten Faltlage 24 folgen.

Nach der Ausbildung des Führungsabschnittes 13 kann ein zusätzliches Falten, insbesondere ein Zickzack-Falten, mindestens eines Seitenteils 32, 32' des aufgerollten Aufblasabschnittes 12 folgen, wobei das Falten rechtwinklig zur ersten Aufrollrichtung AR also in Richtung der Längsachse L des Gassackes durchgeführt wird. Insbesondere kann das zusätzliche Falten bzw. Zickzack-Falten mindestens eines Seitenteils 32 bzw. 32' bis auf die Breite BE der Einblasöffnung 11 erfolgen.

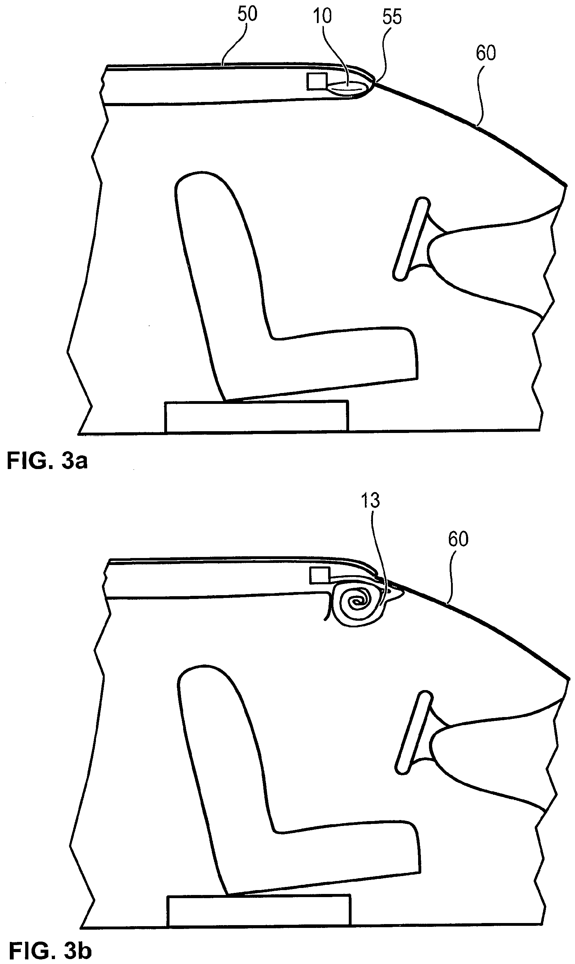

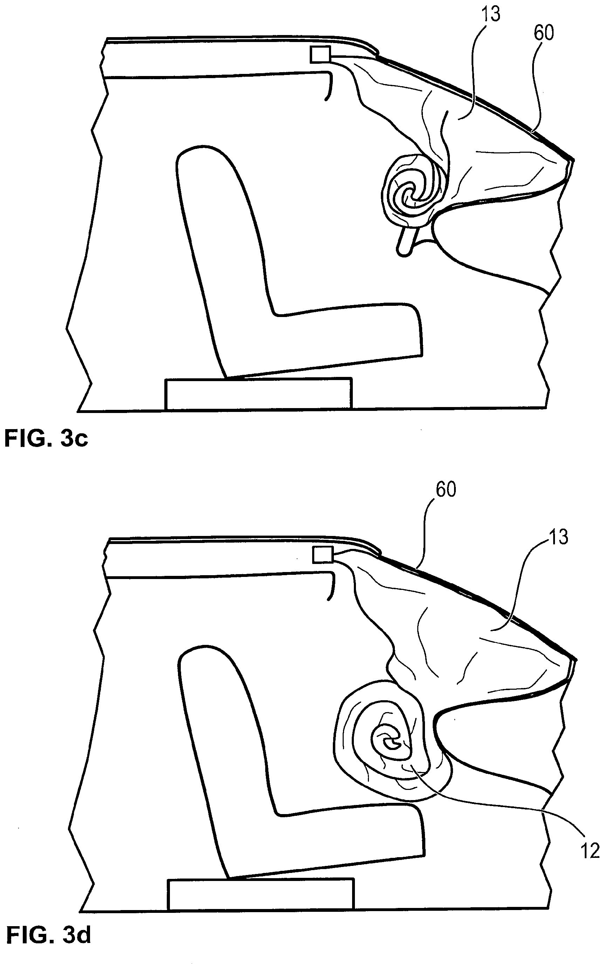

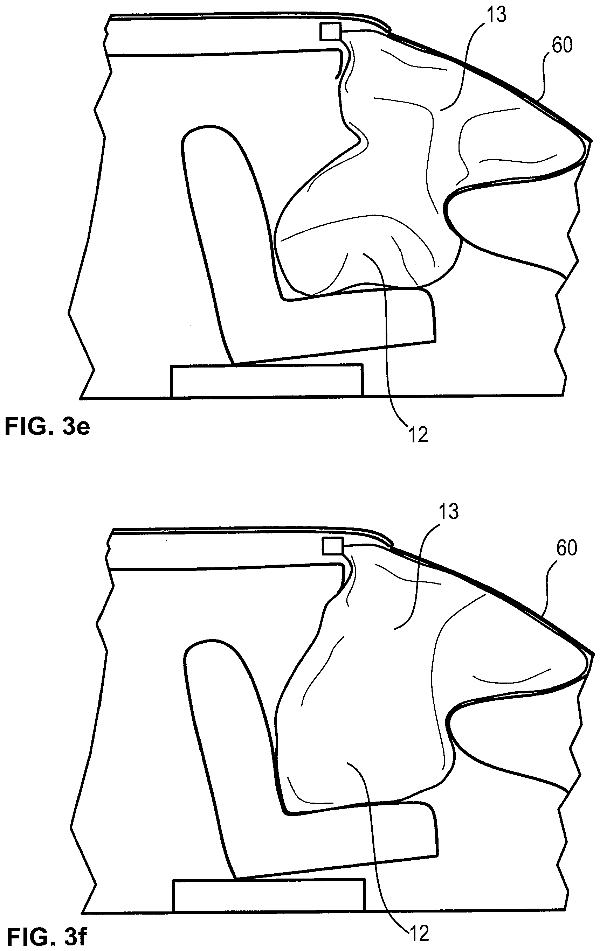

In den Figuren 3a-3f ist der erfindungsgemäße Gassack 10 im eingebauten Zustand dargestellt. Der Gassack 10 ist demnach als Bauteil eines Fahrzeugsicherheitssystems ausgebildet, wobei der Gassack 10 und ein zugehöriger Gasgenerator 28 hinter einer Abdeckung des Fahrzeughimmels im Bereich eines oberen Randes 55 der Windschutzscheibe 60 angeordnet ist. Aus den Figuren 3b-3c geht hervor, dass im aktivierten Zustand zunächst der Führungsabschnitt 13 entlang der Windschutzscheibe 60 entfaltet wird. Der aufgerollte Aufblasabschnitt 12 wird erst nach Entfaltung des Führungsabschnittes 13 entlang der Windschutzscheibe 60 in Fig. 3d entfaltet. Demnach prallt der aufgeblasene Gassack 10 nicht zunächst schlagartig auf die Beine des Fahrzeuginsassens sondern entrollt sich erst entlang der Windschutzscheibe 60 um dann in Richtung des Oberkörpers des Fahrzeuginsassens entfaltet zu werden. Diesbezüglich wird ein erhöhter Fahrzeuginsassenschutz geschaffen.

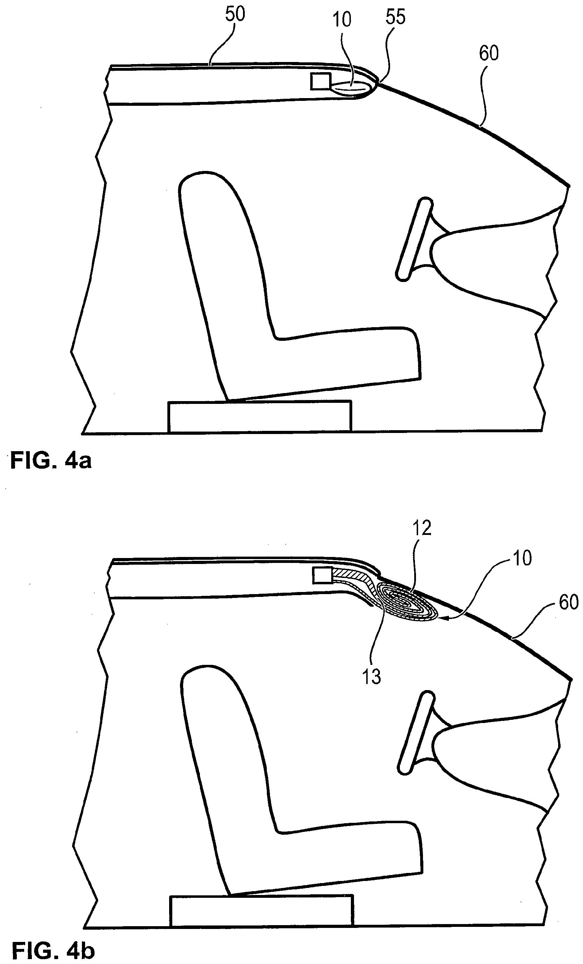

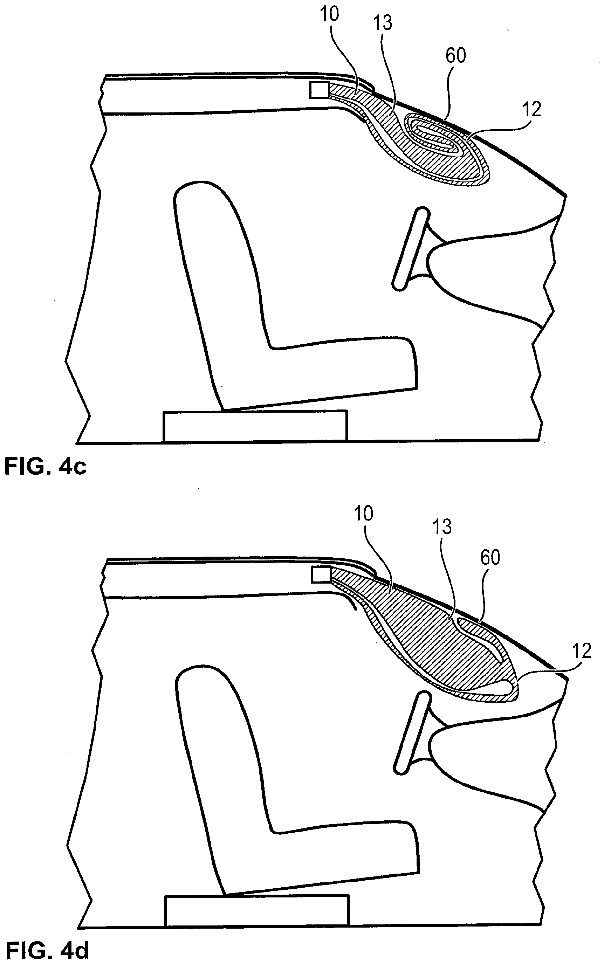

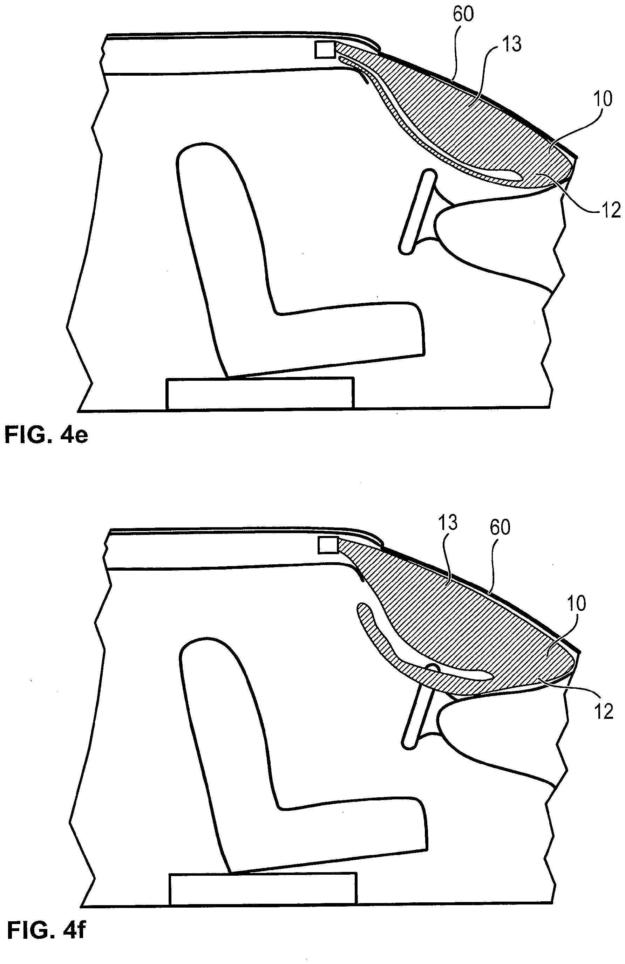

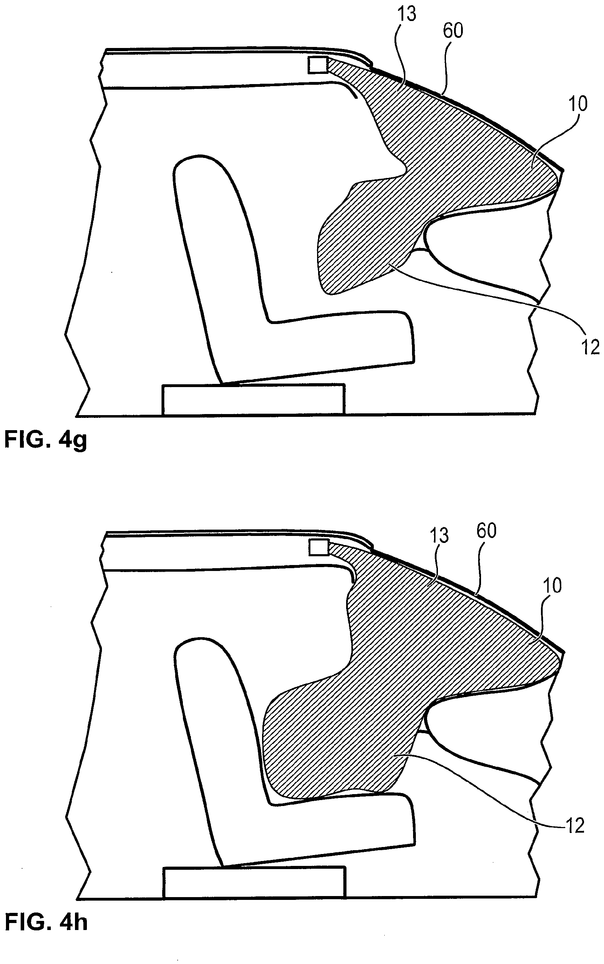

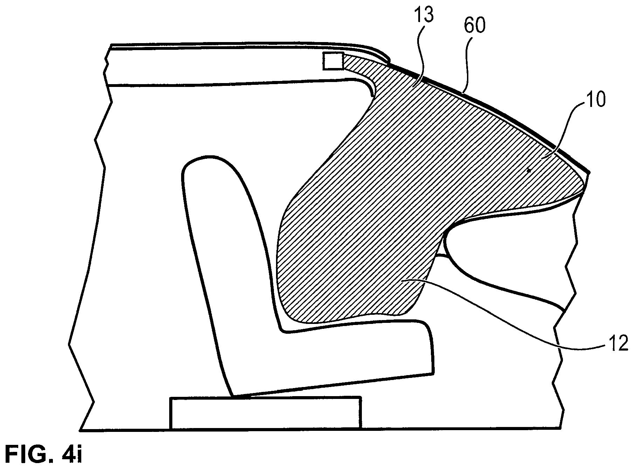

Aus den Figuren 4a bis 4i geht hervor, dass im aktivierten Zustand zunächst der Führungsabschnitt 13 entlang der Windschutzscheibe 60 entfaltet wird. Der zweilagig aufgerollte Aufblasabschnitt 12 wird erst nach Entfaltung des Führungsabschnittes 13 entlang der Windschutzscheibe 60 entfaltet. Nachdem der aufgerollte Aufblasabschnitt 12 nahezu vollständig entfaltet ist, wird die dem Insassen zugewandte zweite Lage in Richtung der Beine des Fahrzeuginsassen entfaltet bis der Gassack vollständig aufgeblasen ist.

### Bezugszeichenliste

- 10: Gassack
- 11: Einblasöffnung
- 12: Aufblasabschnitt
- 13: Führungsabschnitt
- 14: erste Faltbiegung
- 15: Oberseite
- 16: Unterseite
- 17: erste Faltlage
- 18: zweite Faltlage
- 19: erste Öffnung
- 20: zweite Faltbiegung
- 21: dritte Faltlage
- 22: zweite Öffnung
- 23: dritte Faltbiegung
- 24: vierte Faltlage
- 25: dritte Öffnung
- 26: Endkante
- 27, 27', 27": Lage Aufblasabschnitt
- 28: Gasgenerator
- 30, 30': Seitenteil
- 31: Zickzack-Falte
- 32, 32': Seitenteil aufgerollter Aufblasabschnitt
- 40: Hilfsmittel
- 50: Fahrzeugdach
- 55: oberer Rand
- 60: Windschutzscheibe
- AR: Aufrollrichtung
- L: Längsachse
- Z1: Faltungsrichtung
- Z2: Faltungsrichtung
- LA: Breite Aufblasabschnitt
- BE: Breite Einblasöffnung

## Patentansprüche

1. Verfahren zum Zusammenlegen eines Gassackes (10) nach einem der Ansprüche 9 bis 11, insbesondere eines unter einem Fahrzeugdach (50) anzuordnenden Gassackes (10), mit einer Einblasöffnung (11), einem in Längsrichtung daran anschließend angeordneten Führungsabschnitt (13) und einem in Längsrichtung an den Führungsabschnitt (13) anschließend angeordneten Aufblasabschnitt (12), wobei das Verfahren folgende Schritte umfasst:
- flaches Ausbreiten des Gassackes (10);
- mindestens abschnittsweises seitliches Zusammenlegen, insbesondere Zickzack-Falten, von mindestens einem Seitenteil (30; 30') des Gassackes (10) in Richtung der Längsachse (L) des Gassackes (10);
- mindestens abschnittsweises Aufrollen des Aufblasabschnittes (12), ausgehend von einer zur Einblasöffnung (11) maximal beabstandeten Endkante (26) des Gassackes (10) in einer ersten Aufrollrichtung (AR) in Richtung zur Einblasöffnung (11);
- Ausbilden des Führungsabschnittes (13) durch Legen mindestens einer Faltung mit einer ersten Faltbiegung (14) entgegen der ersten Aufrollrichtung (AR) derart, dass das Entfaltungsverhalten des Gassackes (10) beeinflusst wird.

2. Verfahren nach Anspruch 1,
**dadurch gekennzeichnet, dass**
der Führungsabschnitt (13) mindestens abschnittsweise ziehharmonikaartig entgegen der ersten Aufrollrichtung (AR) gefaltet wird.

3. Verfahren nach Anspruch 1 oder 2,
**dadurch gekennzeichnet, dass**
mindestens eine erste (17) und eine zweite Faltlage (18) des Führungsab schnitts (13) ausgehend von der ersten Faltbiegung (14) derart gelegt werden, dass diese eine erste Öffnung (19) bilden, die in Richtung der Einblas öffnung (11) weist.

4. Verfahren nach Anspruch 3,
**gekennzeichnet durch**
ein Ausbilden mindestens einer zweiten Faltbiegung (20) in dem Führungsabschnitt (13), wobei die zweite Faltlage (18) und eine dritte Faltlage (21) ausgehend von der zweiten Faltbiegung (20) eine zweite Öffnung (22) bilden, die von der Einblasöffnung (11) weg weist.

5. Verfahren nach Anspruch 4,
**gekennzeichnet durch**
ein Ausbilden mindestens einer dritten Faltbiegung (23) in dem Führungsab schnitt (13), wobei die dritte Faltlage (21) und eine vierte Faltlage (24) aus gehend von der dritten (23) Faltbiegung eine dritte Öffnung (25) bilden, die in Richtung der Einblasöffnung (11) weist.

6. Verfahren nach einem der vorangegangenen Ansprüche,
**gekennzeichnet durch**
ein zusätzliches Falten, insbesondere ein Zickzack-Falten, mindestens eines Seitenteils (32; 32') des aufgerollten Aufblasabschnittes (12), wobei das Falten rechtwinklig zur ersten Aufrollrichtung (AR) durchgeführt wird.

7. Verfahren nach Anspruch 6,
**dadurch gekennzeichnet, dass**
das zusätzliche Falten, insbesondere das Zickzack-Falten, mindestens eines Seitenteils (32; 32') bis auf die Breite (BE) der Einblasöffnung (11) erfolgt.

8. Gassack (10), gefaltet gemäß einem Verfahren nach einem der vorangegangenen Ansprüche.

9. Gassack (10), insbesondere für ein Gassackmodul zur Anordnung unter einem Fahrzeugdach (50), mit einer Einblasöffnung (11) und einem Aufblasabschnitt (12), mit einem Führungsabschnitt (13), der in Längsrichtung, die im Aktivierungsfall einer Strömungsrichtung eines Füllgases entspricht, zwischen der Einblasöffnung (11) und dem Aufblasabschnitt (12) angeordnet ist, wobei der Aufblasabschnitt (12) in einer ersten Aufrollrichtung (AR) in Richtung der Einblasöffnung (11) aufgerollt ist und der Führungsabschnitt (13) durch Legen mindestens einer Faltung mit einer ersten Faltbiegung (14) entgegen der ersten Aufrollrichtung (AR) gebildet ist und eine erste (17) und eine zweite Faltlage (18) des Führungsabschnitts (13) ausgehend von der ersten Faltbiegung (14) derart gelegt sind, dass diese eine erste Öffnung (19) bilden, die in Richtung der Einblasöffnung (11) weist, und in dem Führungsabschnitt (13) eine zweite Faltbiegung (20) ausgebildet ist, **gekennzeichnet dadurch, dass** von der zweiten Faltlage (18) und einer dritten Faltlage (21) ausgehend von der zweiten Faltbiegung (20) eine zweite Öffnung (22) gebildet ist, die von der Einblasöffnung (11) weg weist, derart, dass das Entfaltungsverhalten des Gassackes (10) beeinflussbar ist.

10. Gassack (10) nach Anspruch 9,
**dadurch gekennzeichnet, dass**
der Führungsabschnitt (13) mindestens abschnittsweise ziehharmonikaartig entgegen der ersten Aufrollrichtung (AR) gefaltet ist.

11. Gassack (10) nach Anspruch 9 oder 10,
**dadurch gekennzeichnet, dass**
in dem Führungsabschnitt (13) eine dritte Faltbiegung (23) ausgebildet ist, wobei von der dritten Faltlage (21) und einer vierten Faltlage (24) ausgehend von der dritten Faltbiegung (23) eine dritte Öffnung (25) gebildet ist, die in Richtung der Einblasöffnung (11) weist.

12. Gassackmodul, insbesondere zur Anordnung unter einem Fahrzeugdach (50), mit einem Gassack (10) nach einem der vorangegangenen Ansprüche und einem Gasgenerator (28) zum Aufblasen des Gassackes (10).

13. Fahrzeugsicherheitssystem mit einem Gassack (10) und/oder mit einem Gassackmodul nach einem der vorangegangenen Ansprüche.

14. Fahrzeugsicherheitssystem nach Anspruch 13,
**dadurch gekennzeichnet, dass**
der Gassack (10) und/oder das Gassackmodul hinter einer Abdeckung des Fahrzeughimmels im Bereich eines oberen Windschutzscheibenrands (55) angeordnet ist, wobei der Gassack (10) beim Auslösen entlang der Windschutzscheibe (60) entfaltbar und aufblasbar ist.

## Claims

1. A method for folding an airbag (10) according to any one of the claims 9 to 11, especially an airbag (10) to be arranged beneath a vehicle roof (50), comprising an injection orifice (11), a guiding portion (13) arranged adjacent thereto in the longitudinal direction and an inflating portion (12) arranged adjacent to the guiding portion (13) in the longitudinal direction, wherein the method comprises the following steps of:
- flatly spreading the airbag (10);
- laterally folding, in particular zigzag folding, at least in portions of at least one side part (30; 30') of the airbag (10) in the direction of the longitudinal axis (L) of the airbag (10);
- rolling up the inflating portion (12) at least in portions starting from a trailing edge (26) of the airbag (10) that is maximally spaced apart from the injection orifice (11) in a first rolling direction (AR) in the direction of the injection orifice (11);
- forming the guiding portion (13) by laying at least one folding including a first folding bend (14) against the first rolling direction (AR) so that the deployment behavior of the airbag (10) is influenced.

2. The method according to claim 1,
**characterized in that**
the guiding portion (13) is folded concertina-like at least in portions against the first rolling direction (AR).

3. The method according to claim 1 or 2,
**characterized in that**
at least one first (17) and one second folding layer (18) of the guiding portion (13) are laid starting from the first folding bend (14) so that they constitute a first opening (19) pointing in the direction of the injection orifice (11).

4. The method according to claim 3,
**characterized by**
a formation of at least one second folding bend (20) in the guiding portion (13), wherein starting from the second folding bend (20) the second folding layer (18) and a third folding layer (21) constitute a second opening (22) pointing away from the injection orifice (11).

5. The method according to claim 4,
**characterized by**
a formation of at least one third folding bend (23) in the guiding portion (13), wherein starting from the third folding bend (23) the third folding layer (21) and a fourth folding layer (24) constitute a third opening (25) pointing in the direction of the injection orifice (11).

6. The method according to any one of the preceding claims,
**characterized by**
an additional folding, in particular a zigzag folding, of at least one side part (32; 32') of the rolled up inflating portion (12), wherein the folding is carried out at right angles to the first rolling direction (AR).

7. The method according to claim 6,
**characterized in that**
the additional folding, in particular the zigzag folding, of at least one side part (32; 32') is performed up to the width (BE) of the injection orifice (11).

8. An airbag (10) folded according to a method in accordance with any one of the preceding claims.

9. The airbag (10), in particular for an airbag module for being arranged beneath a vehicle roof (50), comprising an injection orifice (11) and an inflating portion (12),
comprising a guiding portion (13) arranged between the injection orifice (11) and the inflating portion (12) in the longitudinal direction corresponding to a flow direction of the filling gas in the event of activation, wherein the inflating portion (12) is rolled up in a first rolling direction (AR) in the direction of the injection orifice (11) and the guiding portion (13) is formed by laying at least one folding with a first folding bend (14) against the first rolling direction (AR) and a first (17) and a second folding layer (18) of the guiding portion (13) starting from the first folding bend (14) are laid so that they form a first opening (19) pointing in the direction of the injection orifice (11), and a second folding bend (20) is formed in the guiding portion (13), **characterized in that** a second opening (22) is formed by the second folding layer (18) and a third folding layer (21) starting from the second folding bend (20) pointing away from the injection orifice (11) so that the deployment behavior of the airbag (10) can be influenced.

10. The airbag (10) according to claim 9,
**characterized in that**
the guiding portion (13) is folded concertina-like at least in portions against the first rolling direction (AR).

11. The airbag (10) according to claim 9 or 10,
**characterized in that**
in the guiding portion (13) a third folding bend (23) is formed, wherein starting from the third folding bend (23) a third opening (25) pointing in the direction of the injection orifice (11) is formed by the third folding layer (21) and a fourth folding layer (24).

12. An airbag module, in particular for being arranged beneath a vehicle roof (50), comprising an airbag (10) according to any one of the preceding claims and a gas generator (28) for inflating the airbag (10).

13. A vehicle safety system comprising an airbag (10) and/or comprising an airbag module according to any one of the preceding claims.

14. The vehicle safety system according to claim 13,
**characterized in that**
the airbag (10) and/or the airbag module are arranged behind a cover of the vehicle roof liner in the area of an upper windscreen rim (55), wherein upon release the airbag (10) can be deployed and inflated along the windscreen (60).

## Revendications

1. Procédé de pliage d'un sac gonflable (10), en particulier un sac gonflable (10) destiné à être disposé sous le pavillon d'un véhicule (50), muni d'un orifice de gonflage (11), une partie de guidage (13) disposée dans la direction longitudinale et une partie gonflable (12) disposée ultérieurement dans la direction longitudinale de la partie de guidage (13), le procédé comprenant les étapes consistant à:
- étalement à plat du coussin gonflable (10);
- pliage latéral au moins par portions, en particulier un pliage en zigzag, d'au moins une partie latérale (30; 30') du coussin gonflable (10) dans la direction de l'axe longitudinal (L) du coussin gonflable (10);
- enroulage au moins par portions de la partie gonflable (12), en partant d'un bord (26) du sac gonflable (10) à l'extrémité la plus éloignée de l'orifice de gonflage (11) dans une première direction d'enroulement (AR) dans la direction de l'orifice de gonflage (11);
- formage de la partie de guidage (13) en plaçant au moins un pliage avec un premier pli de pliage (14) opposé à ladite première direction d'enroulement (AR), de sorte que le comportement du déploiement du coussin gonflable (10) est influencé.

2. Procédé selon la revendication 1, **caractérisé en ce que** la partie de guidage (13) est pliée au moins partiellement en accordéon contre la première direction d'enroulement (AR).

3. Procédé selon la revendication 1 ou 2, **caractérisé en ce qu'**au moins une première (17) et une deuxième couche de pliage (18) de la partie de guidage (13) partant du premier pli de pliage (14) sont placées de manière à présenter une première ouverture (19), qui fait face à l'orifice de gonflage (11).

4. Procédé selon la revendication 3, **caractérisé par** la formation d'au moins un second pli de pliage (20) dans la section de guidage (13), pour lequel la deuxième couche de pliage (18) et une troisième couche de pliage (21) partant du second pli de pliage (20) forme une deuxième ouverture (22), qui est située opposée à l'orifice de gonflage (11).

5. Procédé selon la revendication 4, **caractérisé par** la formation d'au moins un troisième pli de pliage (23) dans la section de guidage (13), pour lequel la troisième couche de pliage (21) et une quatrième couche de pliage (24) partant d'un troisième pli de pliage (23) forme une troisième ouverture (25), qui fait face à l'orifice de gonflage (11).

6. Procédé selon l'une quelconque des revendications précédentes, **caractérisé par** un pliage supplémentaire, notamment un pliage en zigzag, d'au moins une partie latérale (32, 32 ') de la section de gonflage enroulée (12), pour lequel le pliage est effectué perpendiculairement au premier sens d'enroulement (AR).

7. Procédé selon la revendication 6, **caractérisé en ce que** le pliage supplémentaire, en particulier le pliage en zigzag, comporte au moins une partie latérale (32, 32') jusqu'à la largeur (BE) de l'orifice de gonflage (11).

8. Coussin gonflable (10) plié selon un procédé décrit selon l'une des revendications précédentes.

9. Sac gonflable (10), en particulier pour un module airbag disposé sous le pavillon d'un véhicule (50), avec un orifice de gonflage (11) et une partie gonflable (12), avec une partie de guidage (13), qui dans la direction longitudinale, laquelle, en cas d'activation, correspond à une direction d'écoulement d'un gaz de remplissage, est disposée entre l'orifice de gonflage (11) et la partie gonflable (12), pour lequel la partie gonflable (12) est enroulée dans une première direction d'enroulement (AR) dans la direction de l'orifice de gonflage (11) et la partie de guidage (13) est réalisée en plaçant au moins un pliage avec une premier pli de pliage (14) opposée à ladite première direction d'enroulement (AR) et une première (17) et une seconde couche de pliage (18) de la partie de guidage (13) sont disposées à partir du premier pli de pliage (14), de sorte que celles-ci forment une première ouverture (19), qui se présente dans la direction de l'orifice de gonflage (11), et dans la partie de guidage (13) est formé un deuxième pli de pliage (20), pour lequel de la seconde couche de pliage (18) et d'une troisième couche de pliage (21) en partant du second pli de pliage (20) est formée une seconde ouverture (22), qui est opposée à l'orifice de gonflage (11), de telle sorte que le comportement de déploiement du sac gonflable (10) peut être influencé.

10. Coussin gonflable (10) selon la revendication 9, **caractérisé en ce que** la section de guidage (13) est pliée au moins par sections en accordéon opposée à la première direction d'enroulement (AR).

11. Coussin gonflable (10) selon la revendication 9 ou 10, **caractérisé en ce que** dans la partie de guidage (13) un troisième pli de pliage (23) est formé, pour lequel de la troisième couche de pliage (21) et d'une quatrième couche de pliage (24) à partir du troisième pli de pliage (23) est formée une troisième ouverture (25), qui se présente dans la direction de l'orifice de gonflage (11).

12. Module airbag, en particulier pour être disposé sous un pavillon de véhicule (50), comprenant un coussin gonflable (10) selon l'une quelconque des revendications précédentes et un générateur de gaz (28) pour gonfler le coussin gonflable (10).

13. Système de sécurité pour véhicule avec un sac gonflable (10) et/ou avec un module airbag selon l'une des revendications précédentes.

14. Dispositif de sécurité de véhicule selon la revendication 13, **caractérisé en ce que** le coussin gonflable (10) et/ou le module airbag est agencé derrière un couvercle de la garniture de pavillon dans la zone d'un bord supérieur du pare-brise (55), pour lequel ledit coussin gonflable (10), en cas de déclenchement, est dépliable et gonflable le long du pare-brise (60).
